# EUROPÄISCHE PATENTSCHRIFT

(11) **EP 3 143 279 B1**
(45) Veröffentlichungstag und Bekanntmachung des Hinweises auf die Patenterteilung: **08.01.2020**
(21) Anmeldenummer: 15716441.9
(22) Anmeldetag: 25.03.2015
(51) Int. Cl.: F04B 17/03, F04B 17/06, F04D 13/06, F04B 49/06, F04D 27/00

(54) **VERFAHREN ZUM BETRIEB EINES PUMPENSYSTEMS SOWIE PUMPENSYSTEM**
METHOD FOR OPERATION OF A PUMP SYSTEM AND A PUMP SYSTEM
PROCÉDÉ DE FONCTIONNEMENT D'UN SYSTÈME DE POMPE ET UN SYSTÈME DE POMPE

(30) Priorität: 14.05.2014 DE 102014209155
(43) Veröffentlichungstag der Anmeldung: 22.03.2017
(73) Patentinhaber: WIWA WILHELM WAGNER GMBH & CO. KG, 35633 Lahnau (DE)
(72) Erfinder: TURCZAK, Peter, 35578 Wetzlar (DE); SCHERER, Dirk, 35633 Lahnau (DE)
(74) Vertreter: advotec.
(86) Internationale Anmeldenummer: PCT/EP2015/056455
(87) Internationale Veröffentlichungsnummer: WO 2015/172929

(56) Entgegenhaltungen:
- EP-A1- 0 478 944
- WO-A1-2013/178306
- DE-A1- 10 121 950
- DE-A1-102007 016 385
- DE-A1-102012 104 214
- DE-B3-102007 017 445
- DE-T2-602004 005 154
- DE-U1- 20 206 267

## Beschreibung

Die Erfindung betrifft ein Verfahren zum Betrieb eines Pumpensystems sowie ein Pumpensystem mit einer Pumpeneinheit zum Ausgeben vom Mehrkomponentenmaterial unter Druck mit einer Spritzpistole, wobei die Pumpeneinheit eine Pumpenvorrichtung, einen Mischer und eine Spritzpistole umfasst, wobei die Pumpenvorrichtung zumindest zwei Pumpen zur Förderung vom Komponentenmaterial und jeweils zugeordnete Flüssigkeitsspeicher zur Speicherung von Komponentenmaterial aufweist, wobei die Pumpenvorrichtung eine Bedieneinrichtung aufweist, mittels der eine Steuerung der Pumpenvorrichtung erfolgt.

Derartige Pumpensysteme und Verfahren zur Steuerung bzw. zum Betrieb von Pumpensystemen sind aus dem Stand der Technik hinreichend bekannt und werden regelmäßig zur Oberflächenbeschichtung bzw. zum Auftragen oder Versprühen eines Mehrkomponentenmaterials auf eine Oberfläche eingesetzt. Das Mehrkomponentenmaterial besteht dabei aus einer oder mehreren Basiskomponentenmaterialien und einem Härterkomponentenmaterial, wobei diese Komponentenmaterialien jeweils für sich getrennt in Flüssigkeitsspeichern aufbewahrt werden. Jedem Flüssigkeitsspeicher ist eine Pumpe zur Förderung des jeweiligen Komponen-tenmaterials zugeordnet. Vorzugsweise werden hier pneumatisch angetriebene Kolbenpumpen eingesetzt, wobei jedoch auch andere Arten von Pumpen Verwendung finden können. Mittels der jeweiligen Pumpen werden die Komponentenmaterialien zu einem sogenannten Mischer gefördert und innerhalb des Mischers derart durchmischt, dass das so ausgebildete Mehrkomponentenmaterial aushärten kann. Von dem Mischer wird mittels der Pumpe das Mehrkomponentenmaterial unter Druck zu einer sogenannten Spritzpistole gefördert. Die Spritzpistole muss dabei nicht zwangsläufig eine Pistolenform aufweisen, sondern es kann sich um jede Art von Düse handeln, mit der das Mehrkomponentenmaterial auf eine Oberfläche durch Zerstäubung versprüht werden kann. Dies kann vorzugsweise unter Verwendung von Druckluft erfolgen. Optional können auch ein oder mehrere Erhitzer zur Temperierung des Komponentenmaterials vorgesehen sein. Die Pumpen und die Flüssigkeitsspeicher bilden zusammen eine Pumpenvorrichtung aus, die über eine Bedieneinrichtung von einer Bedienperson bedient bzw. gesteuert werden kann.

Vielfach ist eine derartige Pumpenvorrichtung transportabel ausgestattet, sodass sie einfach in Nähe der zu beschichteten Gegenstände platziert werden kann. Über die Bedieneinrichtung kann die Pumpenvorrichtung dann ein- und ausgeschaltet werden, wobei auch ein Mischungsverhältnis der Komponentenmaterialien an der Bedieneinrichtung eingestellt werden kann. Eine derartige Einstellung erfolgt regelmäßig über eine Variation der jeweiligen Fördermenge der Pumpen. Die Bedieneinrichtung kann daher auch verschiedene Sensoren, Durchflussmengenmesser, Hublängenmesser oder ähnliche Mittel zur Bestimmung und Beeinflussung einer Fördermenge der Pumpen aufweisen. Darüber hinaus muss auch immer eine Spülung einer Förderleitung der Pumpen bzw. des Mischers und der Spritzpistole nach einer Nutzung oder bei beispielsweise einem Farbwechsel erfolgen. Die Bedieneinrichtung verfügt daher häufig auch über eine sogenannte Spülfunktion.

Eine aus einer Pumpenvorrichtung, einem Mischer und einer Spritzpistole gebildete Pumpeneinheit wird beispielsweise zur Beschichtung von Oberflächen mit Korrosionsschutz oder Lacken an oder in Schiffen, Metallbauwerken oder industriellen Anlagen in situ eingesetzt. Wesentlich dabei ist, dass die Pumpeneinheit leicht von einer Bedienperson transportiert und an der jeweiligen Arbeitsstelle in Betrieb genommen werden kann. Eine Förderleitung von der Pumpenvorrichtung zur Spritzpistole kann dabei eine Länge von wenigen Metern bis zu einigen hundert Metern aufweisen. Dies ist insbesondere dann der Fall, wenn eine Oberflächenbeschichtung an schwer zugänglichen Stellen, wie beispielsweise innerhalb eines Schiffsrumpfs, erfolgt.

Während des Betriebs der Pumpeneinheit trägt die betreffende Bedienperson mit der Spritzpistole das Mehrkomponentenmaterial auf die zu beschichtende Oberfläche auf, wobei die Bedienperson während des Beschichtens kontinuierlich ein Arbeitsergebnis überwacht und eventuell korrigierende Einstellungen an der Bedieneinrichtung, wie beispielsweise eine Änderung eines von ihr zuvor eingestellten Mischungsverhältnisses vornimmt. Weiter muss die Bedienperson eine fehlerfreie Funktion der Pumpeneinheit sowie eine ausreichende Befüllung der Flüssigkeitsspeicher kontinuierlich überwachen. Wenn beispielsweise Komponentenmaterial nicht nachgefördert werden kann, kann die Bedienperson gegebenenfalls erst nach einem fehlerhaften Auftrag, beispielsweise ohne Härter, auf diesen Umstand aufmerksam werden. Dies ist insbesondere dann auch von Bedeutung, wenn die Förderleitung besonders lang ist, und mögliche Änderungen an der Pumpenvorrichtung sich erst bei einem Auftragen mit der Spritzpistole zeitlich versetzt für die Bedienperson bemerkbar machen. Insgesamt muss die Bedienperson daher während des Vorgangs des Auftragens des Mehrkomponentenmaterials neben dem eigentlichen Auftragen eine Reihe weiterer Variablen bzw. Betriebsparameter und Umgebungsfaktoren überwachen, um ein zufriedenstellendes Arbeitsergebnis sicherzustellen. Aufgrund der Komplexität der Arbeitsaufgabe für die Bedienperson resultieren daraus regelmäßig Bedienungs- bzw. handwerkliche Fehler, die sich negativ auf ein Arbeitsergebnis oder einen Arbeitsfortschritt auswirken.

Aus der WO 2013/178306 A1 ein Verfahren zum Betrieb eines Pumpensystems sowie ein Pumpensystem mit den Merkmalen des Oberbegriffs der Hauptansprüche bekannt. Das Pumpensystem weist zwei Pumpen mit jeweils zugeordneten Flüssigkeitsspeichern, einen statischen Mischer sowie eine Spritzpistole auf, die eine Pumpeneinheit ausbilden. Die Pumpeneinheit weist darüber hinaus eine Vorrichtung zur Steuerung der Pumpen bzw. von Ventilen auf.

Die DE 10 2007 016385 A1 zeigt eine Vakuumpumpe, die mittels einer Fernbedienung Steuer- bzw. bedienbar ist. Die Fernbedienung kann an der Vakuumpumpe adaptiert werden, sodass die Vakuumpumpe auch unmittelbar an der Vakuumpumpe eine Bedieneinrichtung aufweist.

Die DE 10 2007 017445 B3 offenbart eine Flüssigkeitspumpe, die als eine Gartenpumpe tragbar ausgebildet ist. An der Gartenpumpe ist eine Bedieneinrichtung angeordnet, die von der Gartenpumpe entfernt und zur Fernsteuerung derselben verwendet werden kann.

Die DE 60 2004 005154 T2 betrifft zwei Vakuumpumpen, die mittels einer Steuereinheit gesteuert werden können. Die Vakuumpumpen sind jeweils mittels sogenannter Datenübertragungsmodule drahtlos mit der Steuereinheit verbunden. Über die Steuereinheit bzw. die Datenübertragungsmodule sollen Daten und Befehle sowie Betriebsparameter zum Überwachen und Steuern der Vakuumpumpen ausgetauscht werden. So soll es möglich sein, eine Vielzahl von Vakuumpumpen mittels einer einzelnen Steuereinheit zu betreiben.

Die DE 202 06 267 U1 betrifft ebenfalls eine Vakuumpumpe mit einer Fernbedienung zur Steuerung der Vakuumpumpe. Die Vakuumpumpe verfügt über ein Sende-Empfangs-Modul, welches eine Verbindung zu der Fernbedienung, die eine Bedieneinrichtung ausbildet, herstellt.

Eine Pumpe ist in der DE 10 2012 104214 A1 beschrieben, wobei die Pumpe einen passiven Transponder aufweist, der mittels einer Steuervorrichtung drahtlos konfigurierbar ist. Im Wesentlichen soll eine Software einer Steuervorrichtung der Pumpe durch berührungslosen Datenaustausch konfiguriert werden. Dies kann u. a. über eine sogenannte "App" eines Mobiltelefons durchgeführt werden. Weiter kann auch eine Konfiguration ergänzend über das Internet und eine zentrale Datenbank erfolgen. Beispielsweise können dann auch Benutzerinformationsdaten des Pumpenherstellers übertragen werden.

Der vorliegenden Erfindung liegt daher die Aufgabe zugrunde, ein Verfahren zum Betrieb eines Pumpensystems sowie ein Pumpensystem vorzuschlagen, mit dem ein Auftragen von Mehrkomponentenmaterial für eine Bedienperson vereinfacht wird.

Diese Aufgabe wird durch ein Verfahren mit den Merkmalen des Anspruchs 1 und ein Pumpensystem mit den Merkmalen des Anspruchs 14 gelöst.

Bei dem erfindungsgemäßen Verfahren zum Betrieb eines Pumpensystems mit einer Pumpeneinheit zum Ausgeben von Mehrkomponentenmaterial unter Druck mit einer Spritzpistole umfasst die Pumpeneinheit eine Pumpenvorrichtung, einen Mischer und eine Spritzpistole, wobei die Pumpenvorrichtung zumindest zwei Pumpen zur Förderung von Komponentenmaterial und jeweils zugeordnete Flüssigkeitsspeicher zur Speicherung von Komponentenmaterial aufweist, wobei die Pumpenvorrichtung eine Bedieneinrichtung aufweist, mittels der eine Steuerung der Pumpenvorrichtung erfolgt, wobei die Bedieneinrichtung mit einem Anzeigelement und Bedienelementen ausgebildet ist, wobei das Pumpensystem eine Steuervorrichtung aufweist, wobei die Steuervorrichtung als Einrichtung zur Datenverarbeitung mit einem Anzeigelement und Bedienelementen ausgebildet ist, wobei eine Steuerung der Pumpeneinheit mittels einer Steuereinheit, die von der Steuervorrichtung zusammen mit der Bedieneinrichtung ausgebildet wird, erfolgt, und wobei ein Datenaustausch zwischen der Steuervorrichtung und der Bedieneinrichtung erfolgt.

Insbesondere dadurch, dass zusätzlich zur Pumpeneinheit eine Steuereinheit mit einer Steuervorrichtung vorgesehen ist, kann die Bedieneinrichtung mit der Steuervorrichtung über den Datenaustausch kommunizieren. Die Steuervorrichtung ist dabei jedoch nicht an der Pumpenvorrichtung, also den Pumpen oder der Bedieneinrichtung, angeordnet, sondern räumlich von der Pumpenvorrichtung trennbar, da keine mechanisch konstruktive Verbindung zwischen der Pumpenvorrichtung und der Steuervorrichtung besteht. Unter einer räumlichen oder örtlichen Trennung wird eine Trennung der Gegenstände der Pumpenvorrichtung und der Steuervorrichtung verstanden, wobei durchaus eine Leitungsverbindung zwischen der Bedieneinrichtung und der Steuervorrichtung existieren kann. Dadurch, dass die Bedieneinrichtung und die Steuervorrichtung räumlich getrennt sind, kann ein aus dem Stand der Technik bekannter Funktionsumfang einer Bedieneinrichtung zwischen der Bedieneinrichtung und der Steuervorrichtung aufgeteilt bzw. wesentlich verringert werden. Dies ist insbesondere dann von Vorteil, wenn eine Bedienperson unter schwierigen Umgebungsbedingungen, wie beispielsweise in einem Schiffsrumpf, arbeiten muss und kaum Gelegenheit hat die Pumpenvorrichtung bzw. die Bedieneinrichtung auf eine korrekte Funktion hin zu überwachen. Dies kann dann über die Steuervorrichtung erfolgen, die von der Pumpenvorrichtung örtlich unabhängig ist.

Die Bedieneinheit kann dann auch einen gegenüber dem Stand der Technik geringeren Funktionalitätsumfang aufweisen, sodass zur Handhabung der Pumpenvorrichtung auch weniger gut ausgebildete Bedienpersonen eingesetzt werden können. Funktionalitäten, deren Bedienung einer höheren Qualifikation bedarf, werden dann von der Steuervorrichtung ausgeführt. Beispielsweise kann die Steuervorrichtung von der Bedieneinrichtung mit Daten über einen Füllstand der Flüssigkeitsspeicher oder ein Mischungsverhältnis bzw. ein Fördervolumen der jeweiligen Pumpen versorgt werden. Umgekehrt kann über die Steuervorrichtung eine erweitere Einstellung der Bedieneinrichtung erfolgen, beispielsweise eine Voreinstellung eines Mischungsverhältnisses.

Besonders vorteilhaft ist es, wenn der Datenaustausch zwischen der Steuervorrichtung und der Bedieneinrichtung drahtlos erfolgen kann. So kann dann auf eine Leitungsverbindung zwischen der Bedieneinrichtung und der Steuervorrichtung vollständig verzichtet werden. Eine drahtlose Verbindung kann beispielsweise durch eine Funkverbindung innerhalb eines gängigen Frequenzbandes einfach hergestellt werden. So wird es dann auch möglich einen Datenaustausch mit der Bedieneinrichtung zu gewährleisten, wenn diese an einem schwer zugänglichen Ort aufgestellt wurde. Beispielsweise kann dann auch mit der Steuervorrichtung leicht eine Mehrzahl von Pumpenvorrichtungen überwacht werden. Die Steuervorrichtung kann dann auf einem beispielsweise Firmengelände innerhalb eines Bürogebäudes positioniert werden, wobei mit der Steuervorrichtung verschiedene, auf dem Firmengelände befindliche Pumpenvorrichtungen über den Datenaustausch überwacht und gesteuert werden können. Auch ist es so dann möglich, einen Einsatz der jeweiligen Pumpenvorrichtungen, deren Auslastung, eine aktuelle örtliche Position, und ein Betriebsverhalten zu überwachen und statistisch auszuwerten.

Insbesondere Steuerbefehle der Bedieneinrichtung können von Steuerbefehlen der Steuervorrichtung überlagert werden. So kann dann sichergestellt werden, dass eventuelle Bedienungsfehler einer Bedienperson bei der Bedienung der Bedieneinrichtung von der Steuervorrichtung korrigiert werden können. Beispielsweise kann dann auch eine Aktualisierung einer Software der Bedieneinrichtung automatisch von der Steuervorrichtung ausgeführt werden. Auch ist es denkbar, ein mögliches Mischungsverhältnis von Komponentenmaterialen über die Steuervorrichtung auf einen Bereich zu begrenzen, sodass eine Bedienperson nur Einstellungen innerhalb dieses Bereiches vornehmen kann.

Mittels der Steuervorrichtung kann weiter ein Datenaustausch mit einem externen Netzwerk erfolgen. Unter einem externen Netzwerk wird ein Netzwerk verstanden, welches nicht dem Pumpensystem zugerechnet werden kann. Ein derartiges Netzwerk kann beispielsweise ein Intranet oder das Internet sein. Dabei ist es unerheblich, wie die Kommunikation mit dem externen Netzwerk erfolgt. Dies kann sowohl über Netzwerkkabel als auch über eine drahtlose Funkverbindung erfolgen. Durch die Kommunikation mit dem externen Netzwerk ergeben sich zahllose Möglichkeiten zur Steuerung oder Beeinflussung der Steuervorrichtung. So kann die Steuervorrichtung ein Interface zur Bedienung der Steuervorrichtung in dem externen Netzwerk zur Verfügung stellen, das heißt die Steuervorrichtung kann über an dem externen Netzwerk angeschlossenen Computern unmittelbar über das externe Netzwerk bedient werden. Dabei besteht selbstverständlich die Möglichkeit zur Beschränkung und/oder Freigabe von Rechten für die jeweiligen Bediener durch die Steuervorrichtung. Weiter können auch mehrere Pumpensysteme an das externe Netzwerk angeschlossen sein bzw. mit diesen verbunden sein, sodass eine Steuerung bzw. Bedienung dieser Pumpensysteme über das externe Netzwerk erfolgen kann. Darüber hinaus ist es möglich, dass die an das externe Netzwerk angeschlossenen Pumpensysteme bzw. das Pumpensystem über die jeweiligen Steuervorrichtungen Daten mit einem Hersteller des Pumpensystems austauschen. So kann der Hersteller eines defekten Pumpensystems im Servicefall unmittelbar auf Fehlermeldungen oder auch andere Systeminformationen bei Bedarf zurückgreifen. Weiter kann der Hersteller Softwareaktualisierungen der Steuervorrichtung vornehmen und die Funktion der Steuervorrichtung beeinflussen. Darüber hinaus können beim Hersteller aus den aus der oder den Steuervorrichtungen durch Übermittlung gewonnenen Daten Statistiken erstellt werden, die auf Fehlerhäufigkeiten oder auf ein Nutzerverhalten schließen lassen, woraus eine Optimierung des Pumpensystems abgeleitet werden kann.

Von der Bedienungseinrichtung können Umgebungsparameter, Betriebszustände, Betriebsparameter und/oder Fehlermeldungen der Pumpenvorrichtung an die Steuervorrichtung übermittelt werden, wobei die Steuervorrichtung die Umgebungsparameter, Betriebszustände, Betriebsparameter und/oder Fehlermeldungen weiterverarbeiten kann. So kann zum Beispiel ein Füllstand eines Flüssigkeitsspeichers der Pumpenvorrichtung von der Bedieneinrichtung kontinuierlich erfasst werden, wobei der Füllstand an die Steuervorrichtung dann übermittelt werden kann. Die Steuervorrichtung kann bei Unterschreiten eines festgelegten Füllstandes eine Reihe weiterer Verfahrensschritte ausführen. So kann die Steuervorrichtung eine Füllstandswarnung ausgeben oder auch eine Nachlieferung von Komponentenmaterial automatisch anfordern. Auch Betriebszustände oder Betriebsparameter können von der Steuervorrichtung dahingehend interpretiert werden, dass ein Wartungsintervall erreicht ist und eine Wartung durchgeführt werden muss. Fehlermeldungen können von der Steuervorrichtung zur automatischen Anforderung von Ersatzteilen genutzt werden.

Folglich können Umgebungsparameter, Betriebszustände, Betriebsparameter und/oder Fehlermeldungen für einen Betriebszeitabschnitt auch kontinuierlich von der Steuervorrichtung gespeichert werden. Dadurch wird es möglich, die vorgenannten Daten zu dokumentieren und erst nach einer abschließenden Überprüfung eines Arbeitsergebnisses eine Rezeptur zu speichern oder zu korrigieren. Auch können dann eventuell fehlerhafte Arbeitsergebnisse oder Qualitätsschwankungen in den Arbeitsergebnissen anhand der gespeicherten Daten nachvollzogen werden, wodurch Rückschlüsse auf eventuell zu berücksichtigende Parameter gezogen werden können.

Darüber hinaus können von der Bedieneinrichtung und/oder der Steuervorrichtung Umgebungsparameter, Betriebszustände, Betriebsparameter und/oder Fehlermeldungen der Pumpenvorrichtung an die Spritzpistole übermittelt werden. Durch die Übermittlung der vorgenannten Daten ist es möglich, auch eine automatische Einstellung der Spritzpistole, beispielsweise über motorisch angetriebene Ventile oder über eine motorische Düseneinstellung vorzunehmen. Darüber hinaus können die vorgenannten Daten auch an der Spritzpistole angezeigt werden, so dass eine Bedienperson unmittelbar Kenntnis über beispielsweise eine Fehlermeldung oder einen Füllstand eines Flüssigkeitsspeichers erhält. Dies ist insbesondere dann von Vorteil, wenn die Bedienperson mit der Spritzpistole in einem großen Abstand von der Pumpenvorrichtung mit der Spritzpistole arbeitet.

Von der Steuervorrichtung können Steuerbefehle und/oder Betriebeinstellungen für die Pumpenvorrichtung an die Bedieneinrichtung übermittelt werden. Die Steuervorrichtung kann folglich Einstellungen wie Mischungsverhältnisse, Drücke etc. unmittelbar an die Bedieneinrichtung der Pumpenvorrichtung übermitteln, so dass eine Bedienperson diese Einstellungen an der Bedieneinrichtung nicht mehr vornehmen muss. Auch kann im Falle eines Roboters zur Handhabung der Spritzpistole ein Steuerbefehl zur zum Beispiel Inbetriebsetzung der Pumpenvorrichtung an die Bedieneinrichtung weitergegeben werden.

Die Steuervorrichtung kann anhand geänderter Umgebungsparameter, Betriebszustände und/oder Betriebsparameter die Steuerbefehle und/oder Betriebseinstellungen kontinuierlich anpassen. Die von der Steuervorrichtung an die Bedieneinrichtung übermittelten Steuerbefehle können in Abhängigkeit der von der Bedieneinrichtung an die Steuervorrichtung übermittelten Daten angepasst werden. Diese Anpassung kann bereits schon im Rahmen einer einfachen Regelung mit einem Regelglied erfolgen. Die Regelung kann dabei alleine anhand von beispielsweise einem einzelnen Umgebungsparameter durchgeführt werden, wobei auch eine vergleichsweise komplexe Regelung mit einer Vielzahl von gleichzeitig erfassten Daten durchgeführt werden kann.

In einer einfachen Ausführungsform des Verfahrens kann die Bedieneinrichtung mittels der Steuervorrichtung konfiguriert werden. Das heißt, die Bedieneinrichtung kann mittels der Steuervorrichtung so voreingestellt werden, dass eine Bedienperson keine weitergehende Einstellung der Bedieneinrichtung mehr vornehmen muss.

Insbesondere Statusmeldungen, wie beispielsweise ein Druck oder eine Temperatur, der Steuervorrichtung können an die Bedieneinrichtung und/oder die Spritzpistole übertragen und dort angezeigt werden. So ist es dann möglich, eine Bedienperson unmittelbar an der Spritzpistole oder auch an der Pumpenvorrichtung mit eventuell für die Bedienperson relevanten Informationen zur Durchführung der Arbeitsaufgabe zu versorgen.

Mittels einer Datenbank der Steuervorrichtung kann eine aktuelle Dokumentation, wie beispielsweise ein Schaltplan oder auch Handbücher, des Pumpensystems zur Verfügung gestellt werden. So ist es dann nicht mehr notwendig, ein druckschriftliches Handbuch oder Schaltpläne zur Verfügung zu stellen. Vielmehr kann die Dokumentation dann auch einfach aktualisiert und an verschiedensten Arbeitsorten von der Steuervorrichtung abgerufen bzw. angezeigt werden.

Mittels der Steuervorrichtung kann in Abhängigkeit der Umgebungsparameter, Betriebszustände, Betriebsparameter und/oder Fehlermeldungen eine Statusmeldung an ein externes Netzwerk versendet werden. Eine derartige Statusmeldung kann beispielsweise eine Fehlermeldung sein, die an einen Hersteller des Pumpensystems versendet wird. Der Hersteller wird damit frühzeitig über einen möglichen Ausfall des Pumpensystems bzw. von Komponenten des Pumpensystems in Kenntnis gesetzt und kann anhand der übermittelten Statusmeldungen, ohne vor Ort zu sein, einen Fehler eingrenzen oder erkennen.

Die Pumpeneinheit kann zumindest eine weitere Pumpenvorrichtung umfassen, wobei mittels der Steuereinheit eine Steuerung der Pumpeneinheit mit den Pumpenvorrichtungen erfolgen kann. Folglich kann die Pumpeneinheit zumindest vier Pumpen und zwei Bedieneinrichtungen umfassen, die jeweils einem Pumpenpaar zugeordnet sind. Die zwei Bedieneinrichtungen können zusammen mit der Steuervorrichtung eine Steuereinheit bilden. Mittels der Steuervorrichtung können die Bedieneinrichtungen jeweils für sich alleine gesteuert werden bzw. es kann ein Datenaustausch zwischen den Bedieneinrichtungen und der Steuervorrichtung erfolgen. Die Steuereinheit dient dann zur Betriebsbeeinflussung der Pumpeneinheit. Insgesamt kann so ein modularer Aufbau einer Pumpeneinheit dadurch ermöglicht werden, dass die Steuervorrichtung eine Steuerung sämtlicher Pumpenvorrichtungen ermöglicht. Gegenüber dem bekannten Stand der Technik ist es dann nicht mehr erforderlich, Pumpeneinheiten, die eine Vielzahl von Pumpen aufweisen sollen, aus einzelnen Pumpen auszubilden. Vielmehr wird dann die Pumpeneinheit aus einer Mehrzahl von standardisierten Pumpenvorrichtungen mit jeweils einer Bedieneinrichtung ausgebildet. Die Pumpenvorrichtungen können daher auch autonom betrieben werden. Lediglich die Steuervorrichtung kann mit sämtlichen Bedieneinrichtungen der Pumpenvorrichtungen verbunden sein, und steuert diese dann je nach Bedarf in Art einer überlagerten Steuerung. Kommt es nun zu einem Ausfall einer Pumpe, bedeutet dies, dass die Pumpeneinheit weiter betrieben werden kann, da die betroffene Pumpenvorrichtung einfach ausgewechselt werden kann, ohne dass es einer Stilllegung der übrigen Pumpenvorrichtungen sowie der Steuervorrichtung bedarf. Die defekte Pumpenvorrichtung kann dann räumlich unabhängig von der Pumpeneinheit repariert und für einen Austausch bereit gehalten werden.

Weiter ist es denkbar, dass die Steuervorrichtung bei Bedarf eine Pumpenvorrichtung selbsttätig außer Betrieb nimmt und eine als Reserve vorgehaltene Pumpenvorrichtung in Betrieb setzt. Auch kann ein Konstruktionsaufwand zum Bau eines derartigen Pumpensystems bzw. einer Pumpeneinheit wesentlich verringert werden, da standardisierte Pumpenvorrichtungen, die bereits über eine autonome Steuerung in Form der Bedieneinrichtung verfügen, eingesetzt werden können. Auch ein flexibler Umbau des Pumpensystems wird dadurch möglich, dass die Steuervorrichtung dann lediglich an eine veränderte Anzahl von Pumpenvorrichtungen angepasst werden muss. Die Steuervorrichtung kann dabei so ausgebildet sein, dass eine beliebige Anzahl von Pumpenvorrichtungen mittels der Steuervorrichtung gesteuert werden kann. Die Steuereinheit kann dann auch über die jeweiligen Bedieneinrichtungen einzelne Pumpen steuern, so dass es für eine Funktion des Pumpensystems prinzipiell unerheblich ist, ob eine bestimmte Pumpe einer bestimmten Pumpenvorrichtung zugehörig ist.

Die Pumpen der Pumpenvorrichtung bzw. Pumpenvorrichtungen können von der Steuervorrichtung voneinander unabhängig angesteuert werden. Somit wird es möglich, bei einer Pumpeneinheit mit mehreren Pumpenvorrichtungen auch Pumpen verschiedener Pumpenvorrichtungen zur Mischung eines Mehrkomponentenmaterials gleichzeitig zu betreiben. So kann dann beispielsweise eine erste Pumpe einer ersten Pumpenvorrichtung zusammen mit einer ersten Pumpe einer weiteren Pumpenvorrichtung betrieben werden, wobei eine weitere Pumpe der ersten Pumpenvorrichtung und eine weitere Pumpe der weiteren Pumpenvorrichtung nicht betrieben werden.

Vorteilhaft kann die Steuervorrichtung ein Spülen von Pumpen, Mischer und/oder Spritzpistolen der Pumpenvorrichtung bzw. Pumpenvorrichtungen parallel veranlassen und durchführen. Es ist so möglich, parallel zu einem Verspritzen von Mehrkomponentenmaterial nicht benötigte Leitungsstränge bzw. Förderleitungen, Pumpen, Mischer und Spritzpistolen automatisch zu spülen und für eine sofortige Weiterverwendung freizugeben. Das Verspritzen des Mehrkomponentenmaterials muss durch den Spülvorgang dann nicht unterbrochen werden, wodurch ein erheblicher Zeitgewinn zur Handhabung des Pumpensystems erzielt werden kann.

Insofern kann ein Spülen innerhalb eines Zeitabschnitts nicht genutzter Pumpen, Mischer und/oder Spritzpistolen der Pumpenvorrichtungen automatisch erfolgen.

In einer Ausführungsform des Verfahrens kann mittels der Steuervorrichtung ein Datenaustausch bzw. eine Kommunikation mit einem Roboter erfolgen. Dies ist insofern vorteilhaft, wenn das Pumpensystem zusammen mit einem Roboter zur Beschichtung von Oberflächen eingesetzt wird bzw. die Spritzpistole von dem Roboter gehandhabt wird. Der Roboter kann dann mit den ihm zur Verfügung stehenden Kommunikationsmitteln mit der Steuervorrichtung derart kommunizieren, dass eine Funktion des Pumpensystems von dem Roboter gesteuert wird bzw. an eine Funktion des Roboters angepasst ist.

In einer Ausführungsform des Verfahrens kann die Steuervorrichtung eine Steuereinrichtung und eine Datenbank umfassen, wobei dann in der Datenbank Rezepturen zur Mischung von Mehrkomponentenmaterialien gespeichert sein können, wobei mittels der Steuereinrichtung eine Steuerung der Pumpeneinheit in Abhängigkeit einer Rezeptur erfolgen kann.

Die Steuervorrichtung des Pumpensystems kann folglich die Pumpeneinheit bzw. die Pumpenvorrichtung steuern, beispielsweise durch die Vorgabe eines Mischungsverhältnisses. Dadurch, dass die Steuervorrichtung die Steuereinrichtung mit der Datenbank aufweist, kann von der Steuereinrichtung die Pumpenvorrichtung unmittelbar gesteuert werden, derart, dass der Pumpenvorrichtung durch die Steuereinrichtung ein Mischungsverhältnis gemäß einer in der Datenbank gespeicherten Rezeptur vorgegeben werden kann. Diese Vorgabe kann beispielsweise mittels einer Datenverbindung von Steuereinrichtung und Pumpenvorrichtung erfolgen, wobei eine Fördermenge der jeweiligen Pumpen entsprechend der Rezeptur angepasst werden kann. Eine Bedienung des Pumpensystems kann durch die Speicherung der Rezeptur in der Datenbank dahingehend vereinfacht werden, dass die Rezeptur stets unmittelbar am Pumpensystem verfügbar sein kann und nicht erst beschafft oder gesucht werden muss. Weiter kann je nach verwendetem Komponentenmaterial die jeweils zugehörige Rezeptur einfach ausgewählt werden, ohne dass es einer weitergehenden Einstellung der Pumpenvorrichtung bzw. von Fördermengen der Pumpen bedarf. Vielmehr kann vorgesehen sein, dass mittels der Steuereinrichtung eine automatische Steuerung der Pumpeneinheit bzw. der Pumpe der Pumpeneinheit erfolgt, ohne dass sich eine Bedienperson näher mit den in den Rezepturen gemachten Angaben auseinandersetzen müsste. Eine Bedienung des Pumpensystems kann dadurch wesentlich vereinfacht werden, wobei dann auch weniger qualifizierte Bedienpersonen mit der Bedienung des Pumpensystems betraut werden können.

Weiter kann die Steuereinrichtung Umgebungsparameter, Betriebszustände, Betriebsparameter und/oder Fehlermeldungen verarbeiten, wobei die Steuereinrichtung in der Datenbank eine Anpassung bzw. Änderung der Rezepturen vornehmen kann. Folglich können die in der Datenbank gespeicherten Rezepturen von der Steuereinrichtung verändert werden. Die unter Testbedingungen von Herstellern von Komponentenmaterial erarbeiteten Rezepturen können so an reale Umgebungsbedingungen während eines Betriebs des Pumpensystems angepasst werden. Gegebenenfalls ist es dann auch möglich, Mischungsverhältnisse für Komponentenmaterialien zu verwenden, die nach einer Rezeptur nicht zulässig wären, jedoch tatsächlich, unter bestimmten Bedingungen, ein ausgezeichnetes Arbeitsergebnis liefern. Die von den Rezepturen abweichenden Parameter können beispielsweise von einer Bedienperson versuchsweise erprobt und bei Erfolg oder Misserfolg entsprechend über die Steuereinrichtung in der Datenbank durch die Anpassung bzw. Änderung der vorhandenen Rezepturen gespeichert werden.

Die Datenbank kann in regelmäßigen Zeitabständen oder nach Anforderung von der Steuervorrichtung mit zumindest einer weiteren externen Datenbank synchronisiert werden. Insbesondere kann vorgesehen sein, dass die in der Datenbank befindlichen Rezepturen mit Rezepturen der externen Datenbank synchronisiert werden. So ist es dann möglich, von einem Hersteller von Komponentenmaterial geänderte Rezepturen in die Datenbank nach Anforderung oder auch automatisch zu übertragen.

Dabei kann die Datenbank mit der weiteren externen Datenbank bei einem Hersteller des Pumpensystems oder bei einem Hersteller des Komponentenmaterials verbunden sein. So ist es dann auch möglich, dass die Notwendigkeit einer Bestellung von Komponentenmaterial an der Steuervorrichtung signalisiert wird, oder dass automatisch ein Bestellvorgang beim Hersteller ausgelöst wird. Optional kann die Datenbank auch mit einer Mehrzahl von weiteren, externen Datenbanken unterschiedlichster Hersteller verbunden sein. Umgekehrt können auch von einem Nutzer des Pumpensystems die in der Datenbank befindlichen Rezepturen geändert werden, wobei die geänderten Rezepturen dann wiederum an die weitere externe Datenbank übertragen werden können. Hersteller von Komponentenmaterial können so Kenntnisse darüber erlangen, innerhalb welcher realen Umgebungs- bzw. Nutzungsbedingungen das Komponentenmaterial tatsächlich eingesetzt wird bzw. werden kann. Somit können Rezepturen mit Herstellerrezepturen von Mehrkomponentenmaterial einfach synchronisiert werden.

Die Steuereinrichtung kann auch einen Typ von Spritzpistole, Mischer und/oder Pumpenvorrichtung erkennen, wobei die Steuereinrichtung die Rezepturen unter Berücksichtigung des jeweiligen Typs korrigieren kann. So ist es möglich, die jeweilige Rezeptur an die gerade verwendete Spritzpistole, den Mischer und/oder die Pumpenvorrichtung optimal anzupassen. Gegebenenfalls kann die Pumpenvorrichtung auch einen oder mehrere Erhitzer aufweisen, die dann ebenfalls von der Steuereinrichtung bei der Änderung bzw. Anpassung der Rezeptur berücksichtigt werden können. Dadurch wird es möglich, eine Bedienperson noch weiter von möglichen Einstell- und Überwachungsaufgaben zu entlasten.

Darüber hinaus kann die Steuereinrichtung Umgebungsparameter, Betriebszustände, Betriebsparameter und/oder Fehlermeldungen unter Berücksichtigung der Rezepturen auf Plausibilität prüfen. So kann die Pumpenvorrichtung oder die Pumpeneinheit über beispielsweise einen Sensor zur Messung einer Umgebungstemperatur verfügen, wobei dann die Steuereinrichtung durch einen einfachen Ist-/Sollvergleich feststellen kann, ob bei der gemessenen Umgebungstemperatur das Komponentenmaterial verarbeitet bzw. gespritzt werden kann. Da die Rezepturen eine Reihe von Parametern und Bereichsangaben umfassen, die in einem Verhältnis zueinander stehen können, kann die Steuereinrichtung so eine Einstellung bzw. einen Betrieb der Pumpeneinheit im Rahmen der jeweiligen Rezeptur überprüfen.

Auch können von der Spritzpistole Umgebungsparameter, Betriebszustände, Betriebsparameter und/oder Fehlermeldungen der Spritzpistole an die Steuervorrichtung übermittelt werden, wobei die Steuereinrichtung die Rezepturen unter Berücksichtigung der jeweiligen Umgebungsparameter, Betriebszustände, Betriebsparameter und/oder Fehlermeldungen der Spritzpistole korrigieren kann. Folglich kann die Spritzpistole wie die Pumpenvorrichtung die vorgenannten Informationen bzw. Daten an die Steuervorrichtung übermitteln, derart, dass eine Korrektur der in der Datenbank gespeicherten Rezepturen bzw. der gerade verwendeten Rezeptur aufgrund der aktuellen Datenlage erfolgen kann. So kann die Spritzpistole eine Reihe von Sensoren aufweisen, mittels derer die vorbezeichneten Daten gewonnen werden können. So kann die Spritzpistole über einen Infrarottemperatursensor verfügen, mit dem eine Oberflächentemperatur einer zur beschichtenden Oberfläche kontinuierlich gemessen werden kann. Weitere Parameter, wie eine Umgebungstemperatur und eine Temperatur des zugeführten Komponentenmaterials können ebenfalls von der Spritzpistole bestimmt werden. Aus den gemessenen Temperaturdaten lässt sich ableiten, ob gemäß der verwendeten Rezeptur das Mehrkomponentenmaterial mit einem befriedigenden Arbeitsergebnis verspritzt werden kann bzw. ob entgegen der Rezeptur, das heißt bei von der Rezeptur abweichenden Umgebungsbedingungen dennoch ein befriedigendes Arbeitsergebnis erzielt werden kann. Insbesondere in diesem Fall kann die Steuervorrichtung bzw. die Steuereinrichtung die Rezeptur korrigieren oder auch eine benutzerspezifische Rezeptur speichern.

In einer weiteren Ausführungsform des Verfahrens kann die Steuervorrichtung eine schriftliche Dokumentation der Umgebungsparameter, Betriebzustände, Betriebsparameter und/oder Fehlermeldungen für einen Betriebszeitabschnitt erstellen. Insbesondere die schriftliche Dokumentation kann im Falle von Mängel- oder Garantieansprüchen gegebenenfalls als ein Beweis für eine fehlerfreie Arbeitsausführung herangezogen werden.

Das erfindungsgemäße Pumpensystem weist eine Pumpeneinheit zum Ausgeben von Mehrkomponentenmaterial unter Druck mit einer Spritzpistole auf, wobei die Pumpeneinheit eine Pumpenvorrichtung, einen Mischer und eine Spritzpistole umfasst, wobei die Pumpenvorrichtung zumindest zwei Pumpen zur Förderung von Komponentenmaterial und jeweils zugeordnete Flüssigkeitsspeicher zur Speicherung von Komponentenmaterial aufweist, wobei die Pumpenvorrichtung eine Bedieneinrichtung zur Steuerung der Pumpenvorrichtung aufweist, wobei die Bedieneinrichtung mit einem Anzeigelement und Bedienelementen ausgebildet ist, wobei das Pumpensystem eine Steuervorrichtung aufweist, wobei die Steuervorrichtung als Einrichtung zur Datenverarbeitung mit einem Anzeigelement und Bedienelementen ausgebildet ist, wobei die Steuervorrichtung zusammen mit der Bedieneinrichtung eine Steuereinheit zur Steuerung der Pumpeneinheit ausbildet, wobei die Steuervorrichtung von der Pumpeneinheit örtlich beabstandet angeordnet ist.

Hinsichtlich der vorteilhaften Wirkungen des erfindungsgemäßen Pumpensystems wird auf die Vorteilsbeschreibung des erfindungsgemäßen Verfahrens verwiesen.

Es kann vorgesehen sein, dass die Steuervorrichtung einen gegenüber der Bedieneinrichtung erweiterten Regel-, Steuer- und/oder Funktionalitätsumfang aufweist. Demnach kann dann einer Bedienperson an der Bedieneinrichtung ein eingeschränkter Regel-, Steuer- und/oder Funktionalitätsumfang zur Verfügung gestellt werden, was eine Bedienung der Pumpeneinheit bzw. der Pumpenvorrichtung wesentlich vereinfacht. Auch muss dann die Bedienperson weniger detaillierte fachliche Kenntnisse aufweisen und eventuelle Fehlbedienungen können sicher ausgeschlossen werden. So kann vorgesehen sein, der Bedienperson lediglich vier bis zehn Schalter an der Bedieneinrichtung zur Bedienung der Pumpenvorrichtung bzw. der Pumpeneinheit sowie eine einfache Anzeigevorrichtung zur Verfügung zu stellen. Weitere Funktionalitäten können dann über die Steuervorrichtung bedient werden, wobei die Steuervorrichtung dann den vollen Funktionalitätsumfang der Pumpeneinheit regeln bzw. steuern kann. Die Steuervorrichtung kann demnach auch von einer Bedienperson bedient werden, die vergleichsweise umfangreiche fachliche Kenntnisse aufweist. Die Trennung von Bedieneinrichtung und Steuervorrichtung ist insbesondere dann von Vorteil, wenn die Pumpeneinheit mehrere Pumpenvorrichtungen aufweist, die jeweils von unterschiedlichen Bedienpersonen bedient werden.

Erfindungsgemäß ist die Bedieneinrichtung mit einem Anzeigeelement und Bedienelementen ausgebildet. Das Anzeigeelement der Bedieneinrichtung kann beispielsweise ein einfaches LCD- und/oder LED-Display sein, das gegenüber dem Anzeigeelement der Steuervorrichtung vergleichsweise klein ist. Als Bedienelemente können vier bis zehn Schalter oder Stellelemente zur Bedienung der Grundfunktion der Pumpenvorrichtung vorgesehen sein.

Erfindungsgemäß ist die Steuervorrichtung als eine Einrichtung zur Datenverarbeitung mit einem Anzeigeelement und Bedienelementen ausgebildet. Die Steuervorrichtung kann demnach ein standardisierter Computer, wie beispielsweise ein Personalcomputer mit den üblichen Ein- und Ausgabemitteln, wie Bildschirm und Tastatur, sein. Auch ist es möglich, dass die Steuervorrichtung speziell ausgebildete Anzeigeelemente, wie ein LCD- oder LED-Display und Bedienelemente, wie eine Reihe von Schaltern und Stellelementen aufweist.

In einer Ausführungsform kann auch vorgesehen sein, dass die Steuervorrichtung als ein Mobiltelefon ausgebildet ist. Wenn die Steuervorrichtung insbesondere ein sogenanntes Smartphone ist, kann auf dem Mobiltelefon leicht eine Software zur Steuerung der Bedieneinrichtung installiert werden. Auch ist es dann möglich, eine einfache Verbindung zwischen der Steuerverbindung und Bedieneinrichtung über Bluetooth, W-LAN, GSM, GPRS, UMTS, LTN oder andere Standards zur Datenübertragung herzustellen. Die Steuervorrichtung kann dann auch tragbar bzw. mobil mitgeführt werden. Auch bedarf es keiner besonderen Ausbildung der Steuervorrichtung, da derartige Mobiltelefone vergleichsweise kostengünstig erhältlich sind. Alternativ ist es selbstverständlich möglich, als Steuervorrichtung einen sogenannten Tabletcomputer oder auch ein Notebook oder Netbook zu verwenden.

Im Bereich der Spritztechnik ist es weiter besonders vorteilhaft, wenn die Bedieneinrichtung und/oder die Steuervorrichtung ATEX-konform ausgebildet sind. Diese können dann jeweils als druckgekapselte Einheit nach den ATEX-Leitlinien zum Explosionsschutz gemäß Produktrichtlinie 94/9/EG und Betriebsrichtlinie 1999/92/EG ausgebildet sein. So kann ein besonders sicherer Betrieb des Pumpensystems gewährleistet werden.

Die Pumpeneinheit kann zumindest eine weitere Pumpenvorrichtung umfassen, die mit der Steuervorrichtung verbunden sein kann. Die Pumpenvorrichtungen können im Wesentlichen identisch ausgebildet sein. Zwar ist es auch denkbar, Pumpenvorrichtungen zu verwenden, die jeweils eine unterschiedliche Anzahl von Pumpen aufweisen, jedoch ist es aus ökonomischer Sicht vorteilhafter, identische Pumpenvorrichtungen zu verwenden. Das Pumpensystem muss dann nicht mehr individuell für einen Kunden konstruiert bzw. konfiguriert werden, sondern es können ohnehin standardmäßig vorhandene Pumpenvorrichtungen, die beispielsweise auch für einen mobilen Einsatz vorgesehen sein können, zur Ausbildung eines stationären Pumpensystems verwendet werden. Neben einer einfacheren Austauschbarkeit der Pumpenvorrichtungen werden bei einer Verwendung identischer Pumpenvorrichtungen die Kosten zur Ausbildung des Pumpensystems erheblich verringert.

In einer einfachen Ausführungsform kann die Pumpenvorrichtung alleine zwei Pumpen aufweisen. Prinzipiell kann zwar die Pumpenvorrichtung auch mehr als zwei Pumpen aufweisen, jedoch weist regelmäßig eine überwiegende Anzahl von Pumpenvorrichtungen lediglich zwei Pumpen auf. Wenn die Pumpeneinheit aus einer Mehrzahl von Pumpenvorrichtungen gebildet ist, können dann zur Ausbildung der Pumpeneinheit besonders gängige Pumpenvorrichtungen verwendet werden, die daher auch besonders kostengünstig erhältlich sind.

Auch kann die Pumpeneinheit einen weiteren Mischer und eine weitere Spritzpistole umfassen. So kann eine aus mehreren Pumpenvorrichtungen gebildete Pumpeneinheit auch von mehreren Bedienpersonen gleichzeitig genutzt werden. Weiter wird dadurch auch ein schneller Wechsel zwischen Spritzpistolen ermöglicht, insbesondere wenn eine Spritzpistole mit einem Mischer, mit einer ersten Farbe, und eine Spritzpistole mit einem Mischer mit einer zweiten Farbe genutzt wird. Ebenso kann eine nicht genutzte Spritzpistole mit einem Mischer auch während einer parallelen Nutzung einer weiteren Spritzpistole beispielsweise gespült werden.

So kann vorgesehen sein, dass jeder Pumpenvorrichtung jeweils ein Mischer und eine Spritzpistole zugeordnet sind. Alternativ ist es auch möglich, mehr als zwei Pumpenvorrichtung einer Spritzpistole und einem Mischer zuzuordnen, wobei bei einer anderen Anzahl von Pumpenvorrichtungen diesen ebenfalls eine Spritzpistole und ein Mischer zugeordnet sein können.

Die Pumpeneinheit kann alleine eine Pumpe zur Förderung einer Härterkomponente aufweisen. Demnach kann eine Pumpenvorrichtung vorgesehen sein, bei der eine einzelne Pumpe zur Förderung der Härterkomponente genutzt wird. Die weitere Pumpenvorrichtung weist dann keine Pumpe zur Förderung einer Härterkomponente auf. Je nach Kombination von Pumpenvorrichtung und Mischer kann die Härterkomponente von der einen, einzelnen Pumpe den Komponentenmaterialien, die von den übrigen Pumpen gefördert werden können, zugemischt werden. Somit muss nicht jede Pumpenvorrichtung eine Pumpe zur Förderung eines Härterkomponentenmaterials aufweisen, wodurch sich Pumpen einsparen lassen.

Die Steuervorrichtung kann eine Steuereinrichtung zur Steuerung der Pumpeneinheit und eine Datenbank umfassen, wobei in der Datenbank Rezepturen zur Mischung von Mehrkomponentenmaterialien gespeichert sein können.

Besonders vorteilhaft ist es, wenn die Steuervorrichtung zum Datenaustausch mit einem externen Netzwerk ausgebildet ist.

Weitere vorteilhafte Ausführungsformen der Vorrichtung ergeben sich aus den Merkmalsbeschreibungen der auf den Verfahrensanspruch 1 rückbezogenen Unteransprüche.

Nachfolgend werden bevorzugte Ausführungsformen der Erfindung unter Bezugnahme auf die beigefügte Zeichnungen näher erläutert.

Es zeigen:
- **Fig. 1**: eine schematische Darstellung einer ersten Ausführungsform eines Pumpensystems;
- **Fig. 2**: eine schematische Darstellung einer zweiten Ausführungsform eines Pumpensystems;
- **Fig. 3**: eine schematische Darstellung einer dritten Ausführungsform eines Pumpensystems;
- **Fig. 4**: eine schematische Darstellung einer Ausführungsform einer Steuereinheit.

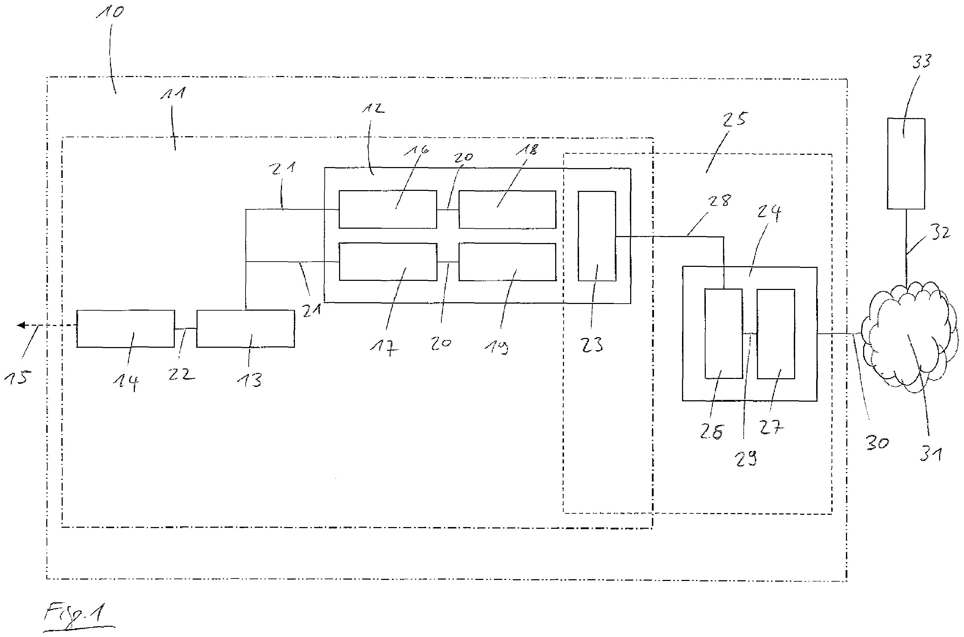

Die **Fig. 1** zeigt eine schematische Darstellung einer ersten Ausführungsform eines Pumpensystems 10. Das Pumpensystem 10 umfasst eine Pumpeneinheit 11, die aus einer Pumpenvorrichtung 12 zur Förderung von Komponentenmaterial, einem Mischer 13, und einer Spritzpistole 14 gebildet ist. Mit der Spritzpistole 14 kann ein im Mischer 13 aus den Komponentenmaterialen gemischtes Mehrkomponentenmaterial auf eine Oberfläche gesprüht bzw. gespritzt werden, wie dies hier mit dem Pfeil 15 angedeutet ist. Die Pumpenvorrichtung 12 umfasst ihrerseits eine erste Pumpe 16 und eine weitere Pumpe 17 sowie einen ersten Flüssigkeitsspeicher 18 und einen weiteren Flüssigkeitsspeicher 19 zur Aufnahme von jeweils flüssigem Komponentenmaterial. Die Flüssigkeitsspeicher 18 und 19 sind jeweils über Medienleitungen 20 mit den Pumpen 16 bzw. 17 verbunden, wobei die Pumpen 16 und 17 über Medienleitungen 21 mit dem Mischer 13, und dieser wiederum über eine Medienleitung 22 mit der Spritzpistole 14 verbunden ist. Die Pumpen 16 und 17 sind als pneumatisch angetriebene Hubkolbenpumpen ausgebildet, so dass von den Pumpen 16 und 17 aus den Flüssigkeitsspeichern 18 bzw. 19 Komponentenmaterialien angesaugt und unter Druck über die Medienleitungen 21 zum Mischer 13 gefördert werden können. Im Mischer 13 erfolgt eine innige Mischung der Komponentenmaterialien und eine Weiterleitung des so ausgebildeten Mehrkomponentenmaterials über die Medienleitung 22 zur Spritzpistole 14. Die Spritzpistole 14 weist einen hier nicht dargestellten Druckluftanschluss auf, so dass das Mehrkomponentenmaterial mittels Druckluft ausgegeben bzw. versprüht werden kann. Darüber hinaus weist die Pumpenvorrichtung 12 eine Bedieneinrichtung 23 auf, über die eine Steuerung der Pumpenvorrichtungen 12 bzw. der Pumpeneinheit 11 auf einfache Weise erfolgen kann. Die Bedieneinrichtung 23 stellt einer Bedienperson Basisfunktionen zur Bedienung der Pumpenvorrichtung 12 zur Verfügung.

Das Pumpensystem 10 umfasst weiter eine Steuervorrichtung 24 zur Steuerung der Bedieneinrichtung 23 bzw. der Pumpenvorrichtung 12. Die Steuervorrichtung 24 bildet zusammen mit der Bedieneinrichtung 23 eine Steuereinheit 25 aus. Die Steuervorrichtung 24 selbst weist eine Steuereinrichtung 26 sowie eine Datenbank 27 auf. Die Steuervorrichtung 24 bzw. die Steuereinrichtung 26 ist über eine hier schematisch dargestellte Datenverbindung 28 zum Datenaustausch mit der Bedieneinrichtung 23 verbunden. Weiter ist die Steuereinrichtung 26 mit der Datenbank 27 über eine Datenverbindung 29 zum Datenaustausch verbunden. Darüber hinaus ist die Steuervorrichtung 24 über eine Datenverbindung 30 mit einem externen Netzwerk 31, wie zum Beispiel das Internet, verbunden. An das externe Netzwerk 31 ist über eine Datenverbindung 32 eine weitere Datenbank 33 angeschlossen. Die weitere Datenbank 33 ist beispielsweise eine Datenbank des Herstellers des Pumpensystems 10 oder des Herstellers des Komponentenmaterials.

Die Steuervorrichtung 24 ist vorzugsweise als ein hier nicht näher dargestelltes Mobiltelefon ausgebildet, so dass es sich bei den Datenverbindungen 28 und 30 um drahtlose Funkverbindungen handelt. Die Steuereinrichtung 26 stellt somit einen Prozessor bzw. Datenverarbeitungseinrichtung des Mobiltelefons und die Datenbank 27 einen Speicher des Mobiltelefons dar. Die Steuervorrichtung 24 weist eine gegenüber der Bedieneinrichtung 23 erweiterte Funktionalität auf. So können neben den mit der Bedieneinrichtung 23 nutzbaren Funktionalitäten mit der Steuervorrichtung 24 noch darüber hinausgehende Funktionalitäten der Pumpenvorrichtung 12 bzw. der Pumpeneinheit 11 genutzt werden. Insbesondere durch einen Datenaustausch zwischen der Bedieneinrichtung 23 und der Steuervorrichtung 24 kann auch eine Überwachung der Pumpenvorrichtung 12 bzw. eine Dokumentation von Umgebungsparametern, Betriebszuständen, Betriebsparmetern und/oder Fehlermeldungen der Pumpenvorrichtung 12 bzw. Pumpeneinheit 11 erfolgen. So wird es möglich, dass die gewonnenen Daten einerseits zur veränderlichen Steuerung der Pumpenvorrichtung 12 durch die Steuervorrichtung 24 in Art einer Regelung genutzt werden können und andererseits die Dokumentation der Daten zur Qualitätssicherung und nachträglichen Nachvollziehbarkeit eines Arbeitsergebnisses zu nutzen.

Insbesondere die Datenbank 27 enthält Rezepturen von Herstellern von Komponentenmaterial, mittels derer eine Steuerung der Bedieneinrichtung 23 bzw. der Pumpenvorrichtung 12 erfolgen kann. So kann dann mittels der Steuervorrichtung 24 beispielsweise ein Mischungsverhältnis der Pumpen 16 und 17 durch Variation einer Fördermenge der Pumpen 16 und 17 über die Bedieneinrichtung 23 eingestellt werden. Eine vor Ort befindliche Bedienperson der Spritzpistole 14 ist dann nicht mehr gezwungen unmittelbar auf eine Rezeptur zurückzugreifen und die erforderlichen Einstellungen an der Pumpenvorrichtung 12 bzw. Bedieneinrichtung 23 vorzunehmen. Darüber hinaus können mögliche Fehlermeldungen der Pumpenvorrichtung 12 an die Steuervorrichtung 24 übermittelt werden, wobei die Steuervorrichtung 24 diese Fehlermeldungen auch an das externe Netzwerk 31 weitergeben kann. Die Rezepturen, Dokumentationen, Handbücher etc. können in der weiteren Datenbank 33 vorgehalten werden und in regelmäßigen Abständen mit den in der Datenbank 27 vorgehaltenen Daten synchronisiert werden. Auch ist es so möglich Fehlermeldungen unmittelbar, beispielsweise per E-Mail, an einen Hersteller des Pumpensystems 10 zu senden, um so gegebenenfalls eine Servicedienstleistung zu initiieren. Darüber hinaus besteht die Möglichkeit, an der Steuervorrichtung 24, und gegebenenfalls auch an der Bedieneinrichtung 23 die Rezepturen zu ändern bzw. anzupassen bzw. neue Rezepturen in der Datenbank 27 zu speichern. Diese geänderten Rezepturen können weitere Informationen über die tatsächlich gegebenen Arbeitsbedingungen, wie beispielsweise Temperaturen, Luftfeuchte etc. enthalten, so dass von der Steuervorrichtung 24 diese Daten an die weitere Datenbank 33 zur Aktualisierung bzw. Anpassung der bei Herstellern von Komponentenmaterial befindlichen Rezepturen genutzt werden kann.

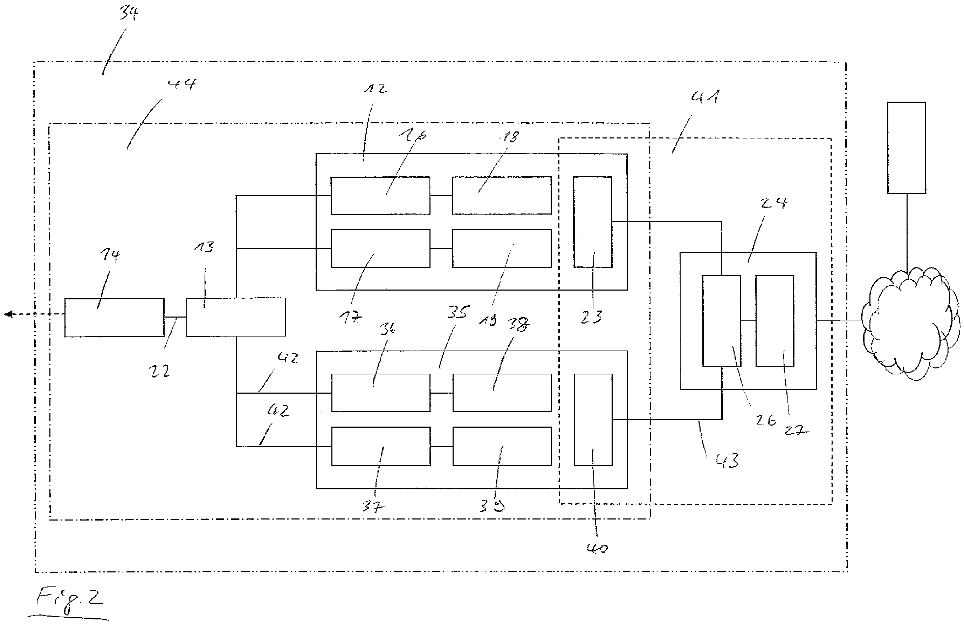

Die **Fig. 2** zeigt eine zweite Ausführungsform eines Pumpensystems 34, welches im Unterschied zu dem in **Fig.1** gezeigten Pumpensystem eine weitere Pumpenvorrichtung 35 aufweist. Die weitere Pumpenvorrichtung 35 verfügt über eine erste Pumpe 36 und eine weitere Pumpe 37 sowie einen ersten Flüssigkeitsspeicher 38 und einen weiteren Flüssigkeitsspeicher 39 und eine Bedieneinrichtung 40. Die Bedieneinrichtungen 23 und 40 bilden nunmehr zusammen mit der Steuervorrichtung 24 eine Steuereinheit 41 aus. Auch ist die weitere Pumpenvorrichtung 35 mit dem Mischer 13 und der Spritzpistole 14 über Medienleitungen 42 und 22 verbunden. Darüber hinaus ist die Steuereinrichtung 26 über eine Datenverbindung 43 mit der Bedieneinrichtung 40 drahtlos verbunden. Mittels der Steuervorrichtung 24 ist es nun möglich die Pumpenvorrichtung 12 und die Pumpenvorrichtung 35 gleichzeitig zu steuern und zusammen mit dem Mischer 13 und der Spritzpistole 14 zu einer Pumpeneinheit 44 zusammenzuführen. Die Pumpenvorrichtung 12 und die Pumpenvorrichtung 35 sind im Wesentlichen identisch ausgebildet, so dass bei einem Ausfall einer Pumpenvorrichtung 12 oder 35 diese einfach ausgewechselt werden kann, ohne dass die Pumpeneinheit 44 vollständig außer Betrieb genommen werden müsste. Auch ist es möglich über die Steuervorrichtung 24 die Pumpen 16, 17 und 36, 37 vollkommen unabhängig voneinander zu betreiben und zum Mischen von Mehrkomponentenmaterial in beliebigen Kombinationen zusammenzuschalten.

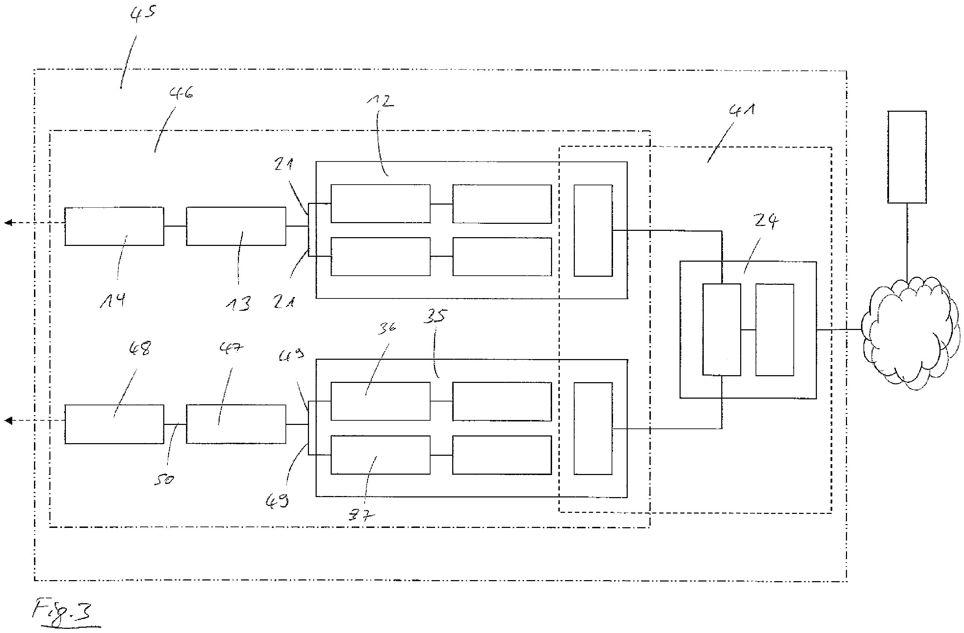

Die **Fig. 3** zeigt eine schematische Darstellung einer dritten Ausführungsform eines Pumpensystems 45. Im Unterschied zu dem in **Fig. 2** dargestellten Pumpensystem verfügt hier eine Pumpeneinheit 46 über einen weiteren Mischer 47 und eine weitere Spritzpistole 48, wobei die erste Pumpe 36 und die weitere Pumpe 37 über Medienleitungen 49 mit dem Mischer 47, und der Mischer 47 über eine Medienleitung 50 mit der Spritzpistole 48 verbunden ist. Die Pumpenvorrichtungen 12 und 35 können dann auch vollkommen räumlich voneinander getrennt verwendet werden, wobei die Steuervorrichtung 24 ebenfalls örtlich und räumlich von den Pumpenvorrichtungen 12 und 35 getrennt aufgestellt sein kann. Dennoch ist es möglich die Pumpenvorrichtungen 12 und 35 gleichzeitig zu steuern und zu überwachen.

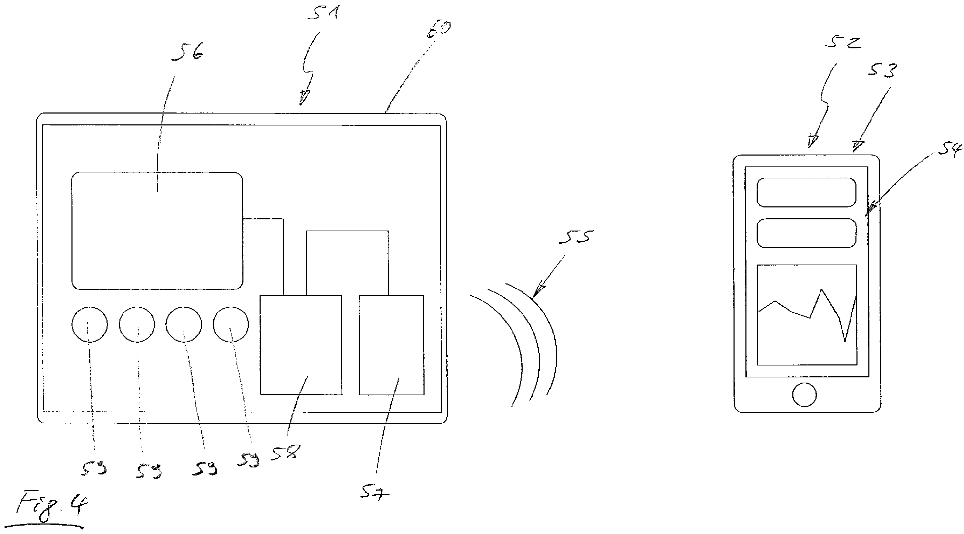

Die **Fig. 4** zeigt eine schematische Darstellung einer Bedieneinrichtung 51 zusammen mit einer Steuervorrichtung 52. Die Steuervorrichtung 52 ist als ein Mobiltelefon 53 mit einem Berührungsbildschirm 54 ausgebildet und über eine Funkdatenverbindung 55 mit der Bedieneinrichtung 51 gekoppelt bzw. verbunden. Die Bedieneinrichtung 51 verfügt über einen Bildschirm 56 einen Prozessor 57, eine SPS-Steuerung 58 sowie Bedienschaltern 59. Diese Komponenten sind in einem druckgekapselten Gehäuse 60, welches dem ATEX-Standard entspricht, aufgenommen. Einer Bedienperson steht mit den Bedienschaltern 59 eine eingeschränkte Funktionalität der hier nicht näher dargestellten Pumpeneinheit zur Verfügung, wobei eine volle Funktionalität dieser Pumpeneinheit mittels der Steuervorrichtung 52 genutzt werden kann.

## Patentansprüche

1. Verfahren zum Betrieb eines Pumpensystems (10, 34, 45), wobei mit einer Pumpeneinheit (11, 44, 46) des Pumpensystems Mehrkomponentenmaterial unter Druck mit einer Spritzpistole (14, 48), einer Pumpenvorrichtung (12, 35) und einem Mischer (13, 47) der Pumpeneinheit ausgegeben wird, wobei mit zumindest zwei Pumpen (16, 17, 36, 37) der Pumpenvorrichtung Komponentenmaterial gefördert wird, und mit jeweils den Pumpen zugeordneten Flüssigkeitsspeichern (18, 19, 38, 39) der Pumpenvorrichtung Komponentenmaterial gespeichert wird, wobei mittels einer Bedieneinrichtung (23, 40, 51) der Pumpenvorrichtung eine Steuerung der Pumpenvorrichtung erfolgt,
**dadurch gekennzeichnet,**
**dass** die Bedieneinrichtung mit einem Anzeigelement (56) und Bedienelementen (59) ausgebildet ist, wobei das Pumpensystem eine Steuervorrichtung (24, 52) aufweist, wobei die Steuervorrichtung als Einrichtung zur Datenverarbeitung mit einem Anzeigelement (54) und Bedienelementen (54) ausgebildet ist, wobei eine Steuerung der Pumpeneinheit mittels einer Steuereinheit (25, 41), die von der Steuervorrichtung zusammen mit der Bedieneinrichtung ausgebildet wird, erfolgt, wobei die Steuervorrichtung von der Pumpeneinheit örtlich beabstandet angeordnet ist, und wobei ein Datenaustausch zwischen der Steuervorrichtung und der Bedieneinrichtung erfolgt.

2. Verfahren nach Anspruch 1,
**dadurch gekennzeichnet,**
**dass** der Datenaustausch zwischen der Steuervorrichtung (24, 52) und der Bedieneinrichtung (23, 40, 51) drahtlos erfolgt.

3. Verfahren nach Anspruch 1 oder 2,
**dadurch gekennzeichnet,**
**dass** Steuerbefehle der Bedieneinrichtung (23, 40, 51) von Steuerbefehlen der Steuervorrichtung (24, 52) überlagert werden.

4. Verfahren nach einem der vorangehenden Ansprüche,
**dadurch gekennzeichnet,**
**dass** mittels der Steuervorrichtung (24, 52) ein Datenaustausch mit einem externen Netzwerk (31) erfolgt.

5. Verfahren nach einem der vorangehenden Ansprüche,
**dadurch gekennzeichnet,**
**dass** von der Bedieneinrichtung (23, 40, 51) Umgebungsparameter, Betriebszustände, Betriebsparameter und/oder Fehlermeldungen der Pumpenvorrichtung (12, 35) an die Steuervorrichtung (24, 52) übermittelt werden, wobei die Steuervorrichtung (24, 52) die Umgebungsparameter, Betriebszustände, Betriebsparameter und/oder Fehlermeldungen weiterverarbeitet.

6. Verfahren nach Anspruch 5,
**dadurch gekennzeichnet,**
**dass** Umgebungsparameter, Betriebszustände, Betriebsparameter und/oder Fehlermeldungen für einen Betriebszeitabschnitt kontinuierlich von der Steuervorrichtung (24, 52) gespeichert werden.

7. Verfahren nach Anspruch 5 oder 6,
**dadurch gekennzeichnet,**
**dass** von der Bedieneinrichtung (23, 40, 51) und/oder der Steuervorrichtung (24, 52) Umgebungsparameter, Betriebszustände, Betriebsparameter und/oder Fehlermeldungen der Pumpenvorrichtung (12, 35) an die Spritzpistole (14, 48) übermittelt werden.

8. Verfahren nach einem der vorangehenden Ansprüche,
**dadurch gekennzeichnet,**
**dass** von der Steuervorrichtung Steuerbefehle und/oder Betriebseinstellungen für die Pumpenvorrichtung an die Bedieneinrichtung übermittelt werden.

9. Verfahren nach einem der vorangehenden Ansprüche,
**dadurch gekennzeichnet,**
**dass** die Steuervorrichtung (24, 52) anhand geänderter Umgebungsparameter, Betriebszustände und/oder Betriebsparameter die Steuerbefehle und/oder Betriebseinstellungen anpasst.

10. Verfahren nach einem der vorangehenden Ansprüche,
**dadurch gekennzeichnet,**
**dass** die Bedieneinrichtung (23, 40, 51) mittels der Steuervorrichtung (24, 52) konfiguriert wird.

11. Verfahren nach einem der vorangehenden Ansprüche,
**dadurch gekennzeichnet,**
**dass** Statusmeldungen der Steuervorrichtung (24, 52) an die Bedieneinrichtung (23, 40, 51) und/oder die Spritzpistole (14, 48) übertragen und angezeigt werden.

12. Verfahren nach einem der vorangehenden Ansprüche,
**dadurch gekennzeichnet,**
**dass** mittels der Steuervorrichtung (24, 52) eine Dokumentation des Pumpensystems (10, 34, 45) zur Verfügung gestellt wird.

13. Verfahren nach einem der vorangehenden Ansprüche,
**dadurch gekennzeichnet,**
**dass** mittels der Steuervorrichtung (24, 52) in Abhängigkeit der Umgebungsparameter, Betriebszustände, Betriebsparameter und/oder Fehlermeldungen eine Statusmeldung an ein externes Netzwerk (31) versendet wird.

14. Pumpensystem (10, 34, 45) mit einer Pumpeneinheit (11, 44, 46) zum Ausgeben von Mehrkomponentenmaterial unter Druck mit einer Spritzpistole, wobei die Pumpeneinheit eine Pumpenvorrichtung (12, 35), einen Mischer (13, 47) und eine Spritzpistole (14, 48) umfasst, wobei die Pumpenvorrichtung zumindest zwei Pumpen (16, 17, 36, 37) zur Förderung von Komponentenmaterial und jeweils zugeordnete Flüssigkeitsspeicher (18, 19, 38, 39) zur Speicherung von Komponentenmaterial aufweist, wobei die Pumpenvorrichtung eine Bedieneinrichtung (23, 40, 51) zur Steuerung der Pumpenvorrichtung aufweist,
**dadurch gekennzeichnet,**
**dass** die Bedieneinrichtung mit einem Anzeigelement (56) und Bedienelementen (59) ausgebildet ist, wobei das Pumpensystem eine Steuervorrichtung (24, 52) aufweist, wobei die Steuervorrichtung als Einrichtung zur Datenverarbeitung mit einem Anzeigelement (54) und Bedienelementen (54) ausgebildet ist, wobei die Steuervorrichtung zusammen mit der Bedieneinrichtung eine Steuereinheit (25, 41) zur Steuerung der Pumpeneinheit ausbildet, wobei die Steuervorrichtung von der Pumpeneinheit örtlich beabstandet angeordnet ist, und wobei ein Datenaustausch zwischen der Steuervorrichtung und der Bedieneinrichtung erfolgt.

15. Pumpensystem nach Anspruch 14,
**dadurch gekennzeichnet,**
**dass** die Steuervorrichtung (24, 52) einen gegenüber der Bedieneinrichtung (23, 40, 51) erweiterten Regel-, Steuer- und/oder Funktionalitätsumfang aufweist.

16. Pumpensystem nach Anspruch 14 oder 15,
**dadurch gekennzeichnet,**
**dass** die Steuervorrichtung (24, 52) als ein Mobiltelefon (53) ausgebildet ist.

17. Pumpensystem nach einem der Ansprüche 14 bis 16,
**dadurch gekennzeichnet,**
**dass** die Bedieneinrichtung (23, 40, 51) und/oder die Steuervorrichtung (24, 52) ATEX-konform ausgebildet sind.

## Claims

1. A method for operating a pump system (10, 34, 45), multi-component material being dispensed under pressure by means of a spray gun (14, 48) of a pump device (12, 35) and by means of a mixer (13, 47) of a pump unit (11, 44, 46) using the pump unit of the pump system, component material being pumped using at least two pumps (16, 17, 36, 37) of the pump device, and component material being stored using liquid tanks (18, 19, 38, 39) of the pump device associated to the respective pump device, the pump device being controlled by means of an operating means (23, 40, 51) of the pump device,
**characterized in that**
the operating means is realized having a display element (56) and an operating means (59), the pump system having a control device (24, 52), the control device being realized as a means for processing data having a display element (54) and operating elements (54), the pump unit being controlled by means of a control unit (25, 41) which together with the operating means is formed by the control device , the control device being disposed at a distance from the pump unit, and data being exchanged between the control device and the operating means.

2. The method according to claim 1,
**characterized in that**
the data exchange between the control device (24, 52) and the operating means (23, 40, 51) is wireless.

3. The method according to claim 1 or 2,
**characterized in that**
control commands of the control device (24, 52) are superimposed on the control commands of the operating means (23, 40, 51).

4. The method according to any one of the preceding claims,
**characterized in that**
data is exchanged with an external network (31) by means of the control device (24, 52).

5. The method according to any one of the preceding claims,
**characterized in that**
the operating means (23, 40, 51) transmits environmental parameters, operating states, operating parameters and/or error messages of the pump device (12, 35) to the control device (24, 52), the control device (24, 52) processing the environmental parameters, operating states, operating parameters and/or error messages.

6. The method according to claim 5,
**characterized in that**
the control device (24, 52) continually stores environmental parameters, operating states, operating parameters and/or error messages for an operating period.

7. The method according to claim 5 or 6,
**characterized in that**
the operating means (23, 40, 51) and/or the control device (24, 52) transmit environmental parameters, operating states, operating parameters and/or error messages of the pump device (12, 35) to the spray gun (14, 48).

8. The method according to any one of the preceding claims,
**characterized in that**
the control device transmits control commands and/or operational settings for the pump device to the operating means.

9. The method according to any one of the preceding claims,
**characterized in that**
the control device (24, 52) adjusts the control commands and/or operational settings according to changed environmental parameters, operating states and/or operating parameters.

10. The method according to any one of the preceding claims,
**characterized in that**
the operating means (23, 40, 51) is configured by means of the control device (24, 52).

11. The method according to any one of the preceding claims,
**characterized in that**
status reports of the control device (24, 52) can be transmitted to the operating means (23, 40, 51) and/or to the spray gun (14, 48) and can be displayed.

12. The method according to any one of the preceding claims,
**characterized in that**
a documentation of the pump system (10, 34, 45) is made available by means of the control device (24, 52).

13. The method according to any one of the preceding claims,
**characterized in that**
a status report is sent to an external network (31) by means of the control device (24, 52) as a function of the environmental parameters, operating states, operating parameters and/or error messages.

14. A pump system (10, 34, 45) having a pump unit (11, 44, 46) for dispensing multi-component material under pressure by means of a spray gun, the pump unit comprising a pump device (12, 35), a mixer (13, 47) and a spray gun (14, 48), the pump device having at least two pumps (16, 17, 36, 37) for pumping component material and associated liquid tanks (18, 19, 38, 39) for storing component material, the pump device having an operating means (23, 40, 51) for controlling the pump device,
**characterized in that**
the operating device is realized having a display element (56) and operating elements (59), the pump system having a control device (24, 52), the control device being realized as a means for processing data having a display element (54) and operating elements (54), the control device and the operating means together forming a control unit (25, 41) for controlling the pump unit, the control device being disposed at a distance from the pump unit.

15. The pump system according to claim 14,
**characterized in that**
the control device (24, 52) has an extended regulating, controlling and/or functionality range compared to the operating means (23, 40, 51).

16. The pump system according to any one of claims 14 to 15,
**characterized in that**
the control device (24, 52) is realized as a mobile phone (53).

17. The pump system according to any one of claims 14 to 16,
**characterized in that**
the operating means (23, 40, 51) and/or the control device (24, 52) are ATEX-compliant.

## Revendications

1. Procédé pour l'opération d'un système de pompes (10, 34, 45), du matériau multi-composants étant dispensé sous pression au moyen d'un pistolet pulvérisateur (14, 48) d'un dispositif de pompe (12, 35) et au moyen d'un mélangeur (13, 47) d'une unité de pompe (11, 44, 46) en utilisant l'unité de pompe du système de pompes, du matériau composant étant pompé en utilisant au moins deux pompes (16, 17, 36, 37) du dispositif de pompe, et du matériau composant étant stocké en utilisant des réservoirs de liquide (18, 19, 38, 39) du dispositif de pompe associés au dispositif de pompe respectif, le dispositif de pompe étant contrôlé au moyen d'un dispositif d'opération (23, 40, 51) du dispositif de pompe,
**caractérisé en ce que**
le dispositif d'opération est réalisé ayant un élément d'affichage (56) et un dispositif d'opération (59), le système de pompes ayant un dispositif de contrôle (24, 52), le dispositif de contrôle étant réalisé en tant que moyen pour le traitement des données ayant un élément d'affichage (54) et des éléments d'opération (54), l'unité de pompe étant contrôlée au moyen d'une unité de contrôle (25, 41) qui est formée conjointement avec le dispositif d'opération au moyen du dispositif de contrôle, le dispositif de contrôle étant disposé espacé de l'unité de pompe, et des données étant échangées entre le dispositif de contrôle et le dispositif d'opération.

2. Procédé selon la revendication 1,
**caractérisé en ce que**
l'échange de données entre le dispositif de contrôle (24, 52) et le dispositif d'opération (23, 40, 51) est sans fil.

3. Procédé selon la revendication 1 ou 2,
**caractérisé en ce que**
les instructions de contrôle du dispositif de contrôle (24, 52) superposent aux instructions de contrôle du dispositif d'opération (23, 40, 51).

4. Procédé selon l'une quelconque des revendications précédentes,
**caractérisé en ce que**
des données sont échangées avec un réseau externe (31) au moyen du dispositif de contrôle (24, 52).

5. Procédé selon l'une quelconque des revendications précédentes,
**caractérisé en ce que**
le dispositif d'opération (23, 40, 51) transmet des paramètres environnementaux, des états fonctionnement, paramètres de fonctionnement et/ou des messages d'erreurs du dispositif de pompe (12, 35) au dispositif de contrôle (24, 52), le dispositif de contrôle (24, 52) traitant les paramètres environnementaux, les états de fonctionnement, les paramètres de fonctionnement et/ou les messages d'erreurs.

6. Procédé selon la revendication 5,
**caractérisé en ce que**
le dispositif de contrôle (24, 52) stocke en permanence des paramètres environnementaux, des états de fonctionnement, des paramètres de fonctionnement et/ou des messages d'erreur pour une période de fonctionnement.

7. Procédé selon la revendication 5 ou 6,
**caractérisé en ce que**
le dispositif d'opération (23, 40, 51) et/ou le dispositif de contrôle (24, 52) transmet/transmettent des paramètres environnementaux, des états de fonctionnement, des paramètres de fonctionnement et/ou des messages d'erreur du dispositif de pompe (12, 35) au pistolet pulvérisateur (14, 48).

8. Procédé selon l'une quelconque des revendications précédentes,
**caractérisé en ce que**
le dispositif de contrôle transmet des instructions de contrôle et/ou des réglages de fonctionnement pour le dispositif de pompe au dispositif d'opération.

9. Procédé selon l'une quelconque des revendications précédentes,
**caractérisé en ce que**
le dispositif de contrôle (24, 52) adapte les instructions de contrôle et/ou des réglages de fonctionnement au moyen des paramètres environnementaux changés, des états de fonctionnement changés et/ou des paramètres de fonctionnement changés.

10. Procédé selon l'une quelconque des revendications précédentes,
**caractérisé en ce que**
le dispositif d'opération (23, 40, 51) est configuré au moyen du dispositif de contrôle (24, 52).

11. Procédé selon l'une quelconque des revendications précédentes,
**caractérisé en ce que**
des avis d'état du dispositif de contrôle (24, 52) peuvent être transmis au dispositif d'opération (23, 40, 51) et/ou au pistolet pulvérisateur (14, 48) et peuvent y être indiqués.

12. Procédé selon l'une quelconque des revendications précédentes,
**caractérisé en ce qu'**
une documentation du système de pompes (10, 34, 45) est mise à disposition au moyen du dispositif de contrôle (24, 52).

13. Procédé selon l'une quelconque des revendications précédentes,
**caractérisé en ce qu'**
un avis d'état est envoyé à un réseau externe (31) au moyen du dispositif de contrôle (24, 52) en fonction des paramètres environnementaux, des états de fonctionnement, des paramètres de fonctionnement et/ou des messages d'erreur.

14. Système de pompes (10, 34, 45) ayant une unité de pompe (11, 44, 46) pour la dispense d'un matériau multi-composants sous pression au moyen d'un pistolet pulvérisateur, l'unité de pompe ayant un dispositif de pompe (12, 35), un mélangeur (13, 47) et un pistolet pulvérisateur (14, 48), le dispositif de pompe comprenant au moins deux pompes (16, 17, 36, 37) pour pomper du matériau composant et des réservoirs de liquide (18, 19, 38, 39) associés respectivement pour le stockage du matériau composant, le dispositif de pompe comprenant un dispositif d'opération (23, 40, 51) pour le contrôle du dispositif de pompe,
**caractérisé en ce que**
le dispositif d'opération est réalisé ayant un élément d'affichage (56) et des éléments d'opération (59), le système de pompes comprenant un dispositif de contrôle (24, 52), le dispositif de contrôle étant réalisé en tant que moyen pour le traitement des données ayant un élément d'affichage (54) et des éléments d'opération (54), le dispositif de contrôle et le dispositif d'opération formant conjointement une unité de contrôle (25, 41) pour le contrôle de l'unité de pompe, le dispositif de contrôle étant disposé espacé de l'unité de pompe.

15. Système de pompes selon la revendication 14,
**caractérisé en ce que**
le dispositif de contrôle (24, 52) a une plage étendu de régulation, de contrôle et/ou de fonctionnalité en comparaison au dispositif d'opération (23, 40, 51).

16. Système de pompes selon l'une quelconque des revendications 14 à 15,
**caractérisé en ce que**
le dispositif de contrôle (24, 52) est réalisé en tant que téléphone portable (53).

17. Système de pompes selon l'une quelconque des revendications 14 à 16,
**caractérisé en ce que**
le dispositif d'opération (23, 40, 51) et/ou le dispositif de contrôle (24, 52) est/sont conforme(s) à la directive ATEX.
